# EUROPÄISCHE PATENTSCHRIFT

(11) **EP 1 731 818 B1**
(45) Veröffentlichungstag und Bekanntmachung des Hinweises auf die Patenterteilung: **03.08.2011**
(21) Anmeldenummer: 06011882.5
(22) Anmeldetag: 08.06.2006
(51) Int. Cl.: F16L 23/04, F16J 13/06

(54) **Einrichtung zur lösbaren Verbindung von zwei Flanschen**
Device for a disconnectable connection of two flanges
Dispositif pour raccordement déconnectable de deux brides

(30) Priorität: 08.06.2005 DE 102005026303
(43) Veröffentlichungstag der Anmeldung: 13.12.2006
(73) Patentinhaber: Glatt Systemtechnik GmbH, 01277 Dresden (DE)
(72) Erfinder: Pritzke, Heinz, 01737 Kesselsdorf/OT Braunsdorf (DE)
(74) Vertreter: Pätzelt, Peter

(56) Entgegenhaltungen:
- DE-A1- 10 315 797
- GB-A- 1 334 258
- US-A- 4 781 406

## Beschreibung

Die Erfindung betrifft eine Einrichtung zur lösbaren Verbindung von zwei Flanschen mit mindestens drei C-förmigen Klemmsegmenten, welche die Flansche in der VerbundStellung radial von außen übergreifen und zusammenhalten.

Nach dem Stand der Technik sind verschiedene Lösungen bekannt, mit denen Flansche lösbar zusammengehalten werden können. Für mechanisierte oder automatisierte Prozesse in der Industrie, insbesondere in der chemischen und pharmazeutischen Industrie haben sich Einrichtungen mit C-förmigen Klemmsegmenten bewährt. Problematisch ist dabei eine einfache und sichere Betätigung der C-förmigen Klemmsegmente.

Die DE 33 05 526 A1 gibt eine fernbetätigte Klemmverbindungs-vorrichtung für zwei Rohre oder zylindrische Behälter an. Von vier Klemmring-Segmenten sind drei gelenkig durch Scharniere verbunden. An zwei aneinanderstoßenden unverbundenen Segmenten sind Spannorgane angebracht, die mittels einer Spannvorrichtung tangential zu den Rohren zusammenspannbar sind. Dadurch lassen sich die Klemmring-Segmente radial-tangential gegen die Verbindungsflansche der Rohre andrücken. Mit Langlöchern in Laschen und Führungsbolzen wird die Bewegung der Klemmring-Segmente zwangsgeführt.

Die DE 89 07 361 U1 offenbart einen Sicherheitsverschluss bei Druckrohren oder Druckbehältern. Auf der zur Verschlussplatte gegenüberliegenden Seite von Ringsegmenten ist innerhalb eines Flanschringes eine Ringscheibe vorhanden. Diese ist konzentrisch, parallel und drehbar zur verschlussplatte positioniert. In die Ringscheibe sind Nute oder Schlitze eingeformt, in die jeweils ein von den Ringsegmenten auskragender Stift verschiebbar eingreift. Beim Drehen der Ringscheibe werden die Ringsegmente in eine Nut des Flanschringes hinein- oder heraus geschwenkt.

In der DE 36 33 380 A1 ist eine Spannvorrichtung zum Verbinden zweier Flansche beschrieben. Die Spannvorrichtung besteht aus einer Vielzahl von Klemmstücken, die über Führungsrollen an einem Haltering, welcher an einem der Flansche vorgesehen ist, radial verschiebbar gehaltert sind. In einer Führungsbahn am Umfang der Klemmstücke laufen Spannrollen, die untereinander mit einer Spannkette verbunden sind. Am Haltering ist ein Spannkranz und ein Spannband drehbar gelagert, welche über ein Schneckengetriebe bewegt werden können. Durch Betätigen des Schneckengetriebes werden die Klemmstücke mit der Spannkette abgesenkt. Die radiale Bewegung wird über Führungsschlitze gewährleistet in denen Führungsrollen geführt werden.

Der Erfindung liegt die Aufgabe zugrunde, eine technisch sichere und automatisch zu betätigende Einrichtung zur lösbaren Verbindung von zwei Flanschen mittels C-förmigen Klemmsegmenten anzugeben. Die Einrichtung soll insbesondere auch zum Einsatz an Druckgefäßen geeignet sein.

Die Erfindung löst die Aufgabe durch die im Anspruch 1 angegebenen Merkmale. Vorteilhafte Weiterbildungen der Erfindung sind in den Unteransprüchen gekennzeichnet und werden nachstehend zusammen mit der Beschreibung der bevorzugten Ausführung der Erfindung, einschließlich der Zeichnung, näher dargestellt.

Erfindungsgemäß ist eine verdrehfeste und zur Verbindungsebene der Flansche parallele Halteplatte vorhanden. Die Halteplatte kann direkt an einem der Flansche oder an der Baueinheit gelagert sein, an der der jeweilige Flansch angeordnet ist. Es ist auch möglich, die Halteplatte unabhängig der beiden Flansche verdrehfest anzuordnen, wobei gesichert werden muss, dass beide Flansche vor der Verbindung zur Halteplatte und zueinander genau und sicher positioniert werden.

An der Halteplatte sind mindestens drei C-förmige Klemmsegmente verdrehfest und radial verschiebbar gelagert. Dazu weisen die C-förmigen Klemmsegmente Führungsbolzen auf. Weiterhin ist an der Halteplatte ein um die Z-Achse der Flansche drehbarer Verstellring mit einer zur Halteplatte parallelen Führungsplatte gelagert, in der Kurvenbahnen ausgebildet sind. Die an der Halteplatte gelagerten Führungsbolzen werden dabei in den Kurvenbahnen der Führungsplatte geführt.

Weiter ist eine Verstelleinrichtung vorhanden, die geeignet ist, den Verstellring mit der Führungsplatte gegenüber der Halteplatte zu verdrehen.

Entsprechend Anspruch 2 kann der Verstellring an der Halteplatte mit mindestens zwei Rollenlagerungen mit jeweils mindestens einer Tragrolle zur Aufnahme vertikaler Lasten und einer Stützrolle zur Aufnahme radialer Kräfte drehbar gelagert sein. Der Verstellring weist radial außen einen Tragkranz auf, den die Rollenlagerungen übergreifen. Der Tragkranz liegt auf den Tragrollen auf und ein äußerer Mantel des Verstellringes liegt radial innen an den Stützrollen an.

Die Lagerung der Führungsbolzen an der Halteplatte erfolgt in Langlöchern, derart dass bei Verdrehung des Verstellringes gegenüber der Halteplatte die Führungsbolzen mit den C-förmigen Klemmsegmenten in den Kurvenbahnen (18) radial zur Z-Achse der Flansche verschoben werden können.

Zur Sicherung der Verbundstellung können nach Anspruch 3 am Verstellring Stützböcke und an den C-förmigen Klemmsegmenten Nocken vorhanden sein, die in der Verbundstellung in einer radialen Linie zur Z-Achse der Flansche aneinander liegen. Dadurch wird eine radiale Verschiebung der C-förmigen Klemmsegmente blockiert.

Die Betätigung der Verstelleinrichtung kann beliebig mit einem pneumatischen, hydraulischen oder elektromotorisch betätigten Antrieb erfolgen.

Der Einsatz von mindestens drei C-förmigen Klemmsegmenten ist in der Praxis meist erforderlich, da bei nur zwei C-förmigen Klemmsegmenten kein vollständiges Umgreifen der Flansche gewährleistet ist oder es ist ein nachteilig langer Weg zum Verschieben der C-förmigen Klemmsegmente erforderlich, bis die Flansche axial voneinander entfernt werden können.

Der Vorteil der erfindungsgemäßen Einrichtung besteht insbesondere darin, dass die C-förmigen Klemmsegmente im Wesentlichen radial zur Z-Achse der Flansche bewegt werden. Bei den Lösungen des Standes der Technik treten überwiegend unerwünschte tangentiale oder radial-tangentiale Reibkräfte zwischen den Flanschen und den C-förmigen Klemmsegmenten auf. Die Erfindung ermöglicht auch eine Ausführung bei der die Berührungsflächen zwischen den Flanschen und den C-förmigen Klemmsegmenten planparallel sind. In derartigen Fällen kann als Dichtung zwischen den Flanschen eine aufblasbare Dichtung vorgesehen werden. Dabei können relativ hohe Toleranzen zugelassen werden.

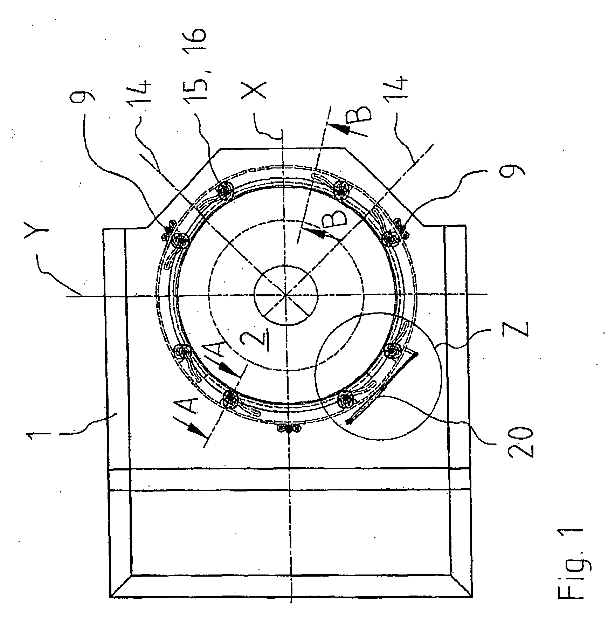

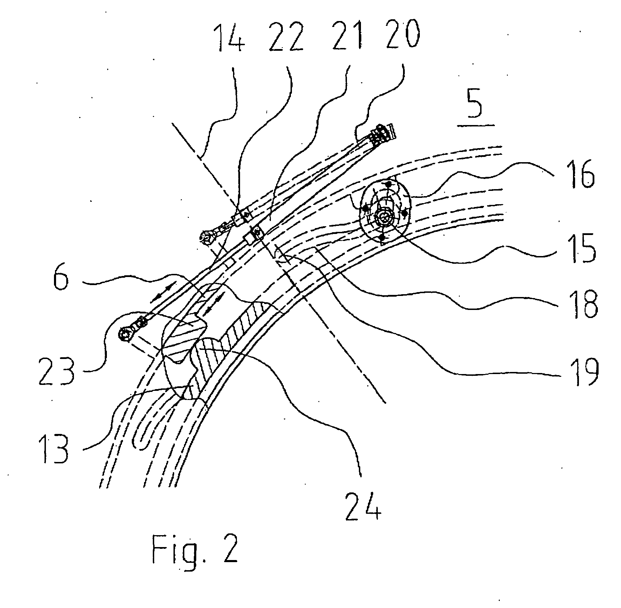

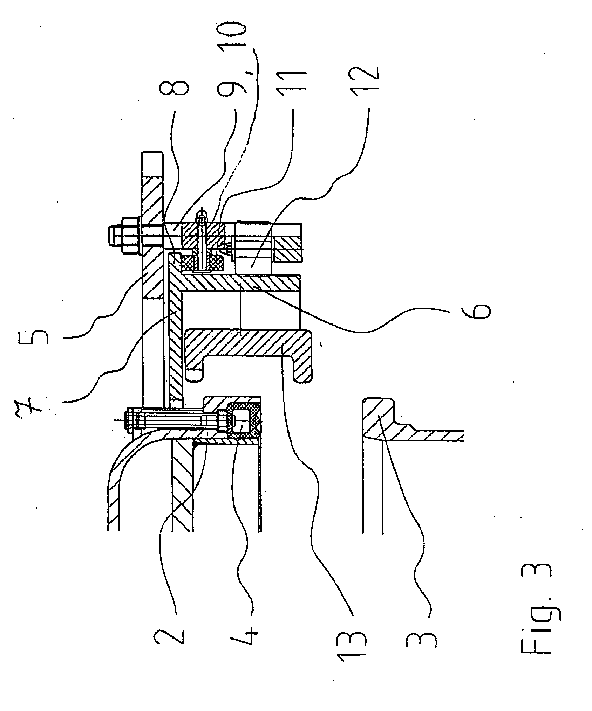

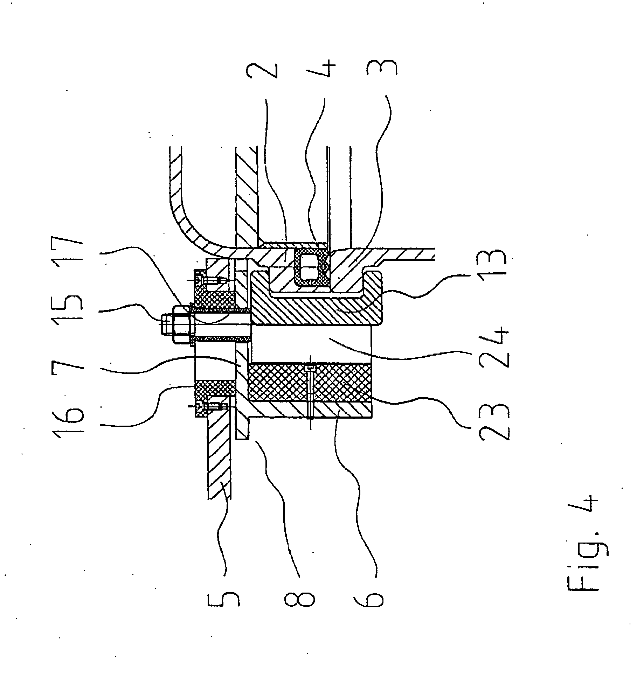

Die Erfindung wird nachstehend an einem Ausführungsbeispiel näher erläutert. Zugehörig zeigt Figur 1 eine Draufsicht auf eine erfindungsgemäße Einrichtung. Figur 2 zeigt den Ausschnitt Z in Figur 1. Die Figuren 3 und 4 zeigen Schnittdarstellungen im Bereich der Flansche und der C-förmigen Klemmsegmente in den Stellungen geöffnet (Figur 3 - Schnitt B-B in Figur 1) bzw. geschlossen (Figur 4 - Schnitt A-A in Figur 1).

Die beispielhafte erfindungsgemäße Einrichtung zur lösbaren Verbindung von zwei Flanschen mit C-förmigen Klemmsegmenten befindet sich an einer Vorrichtung zur Behandlung von Stoffen unter Druck in der pharmazeutischen Industrie. Derartige Vorrichtungen sind immer dann erforderlich, wenn Prozesse unter Überdruck ablaufen oder wenn die Gefahr von explosionsartigen Druckerhöhungen besteht. Bei Prozessen mit einem pharmazeutischen oder auch chemischem Produkt kommt es in besonderer Weise darauf an, dass der Druckbehälter schnell, mechanisiert, sicher und dicht verschlossen und wieder geöffnet werden kann.

Figur 1 zeigt die Draufsicht auf die Vorrichtung zur Behandlung von Stoffen unter Druck mit einem Gestell 1, einem Deckel 2 und einer erfindungsgemäßen Einrichtung. Dabei ist die erfindungsgemäße Einrichtung gemeinsam mit dem Deckel 2 innerhalb eines Gestells 1 gehaltert. Ein Prozessbehälter 3 (siehe Figur 3) wird außerhalb der Vorrichtung befüllt und zur Durchführung des jeweiligen technologischen Prozesses in die Vorrichtung eingebracht und mittels der Einrichtung mit dem Deckel 2 gekuppelt. Der Deckel 2 und der Prozessbehälter 3 (siehe Figur 4) sind zueinander passend ausgebildet, wobei am Deckel 2 eine axial wirkende Dichtung 4 vorgesehen ist, die im geschlossenen zustand die beiden aneinander liegenden Dichtflächen druckfest abdichtet.

Die erfindungsgemäße Halteeinrichtung besteht aus einer Halteplatte 5 (siehe Figur 3), die statisch fest im Gestell 1 und parallel zum Prozessbehälter 3 und zum Deckel 2 angeordnet ist. An der Halteplatte 5 ist über drei Rollenlager 9 ein rohrförmiger Verstellring 6 drehbar gelagert. Dazu weist der Verstellring 6 eine Führungsplatte 7 mit einem äußeren Tragkranz 8 auf.

Figur 3 zeigt die Rollenlager 9 bestehend aus einem Tragbolzen 10, einer Tragrolle 11 und zwei Stützrollen 12. Der Tragkranz 8 lagert auf den Tragrollen 11 der drei Rollenlager 9 und ein vertikaler Abschnitt des rohrförmigen verstellringes 6 ist radial außen an zwei Stützrollen 12 je Rollenlager 9 geführt. Die drei Rollenlager 9 sind konzentrisch zur Z-Achse des Deckels 2 und des Prozessbehälters 3 angeordnet, so dass sich auch der rohrförmige Verstellring 6 um die Z-Achse drehen kann.

zur eigentlichen Verbindung der Flansche des Deckels 2 und des Prozessbehälters 3 weist die Einrichtung im Ausführungsbeispiel vier C-förmige Klemmsegmente 13 auf, von denen zwei gegenüberliegende C-förmige Klemmsegmente 13 in der X-Achse (Figur 1) und die beiden anderen in der Y-Achse verschiebbar angeordnet sind. In geschlossener Stellung treffen jeweils zwei C-förmige Klemmsegmente 13 unter einem Winkel von 45 Grad zu den X-/Y-Achsen in den radialen Linien 14 aneinander, d.h. die Seitenflächen der C-förmigen Klemmsegmente 13 sind zueinander in einem Winkel von 90 Grad geneigt.

Zur Lagerung der einzelnen C-förmigen Klemmsegmente 13 weisen diese jeweils zwei Führungsbolzen 15 auf, welche in Langlöchern in der Halteplatte 5 im Wesentlichen radial verschiebbar gelagert sind. Im Ausführungsbeispiel sind die Langlöcher aus fertigungstechnischen Gründen in gesonderten Langlochlagern 16 ausgebildet, die mit der Halteplatte 5 verschraubt sind. Wie insbesondere aus Figur 4 ersichtlich ist, durchdringt der Führungsbolzen 15 auch die Führungsplatte 7, wobei der Führungsbolzen 15 im Bereich der Langlochlager 16 und der Führungsplatte 7 von einer Gleithülse 17 umgeben ist. Die Durchdringung der Führungsplatte 7 erfolgt innerhalb einer Aussparung, die als Kurvenbahn 18 (Figur 2) ausgebildet ist.

In Figur 2 ist die geschlossene Stellung dargestellt, d.h. die Führungsbolzen 15 befinden sich in einer radial inneren Position und damit befinden sich auch die C-förmigen Klemmsegmente 13 in der radial inneren Position, in der sie die Flansche am Deckel 2 und am Prozessbehälter 3 übergreifen und miteinander verbinden.

Wie noch erläutert wird, befinden sich die Führungsbolzen 15 nach Verdrehung des verstellringes 6 mit der Führungsplatte 7 am anderen Ende der Kurvenbahn 18 im Punkt 19. Damit befinden sich auch die Führungsbolzen 15 am radial äußeren Ende der Langlochlager 16 und die C-förmigen Klemmsegmente 13 in der radial äußeren Position. In dieser Position kann der Deckel 2 und der Prozessbehälter 3 axial voneinander getrennt werden (Figur 3).

Weiterhin beinhaltet die Einrichtung eine pneumatische Verstelleinrichtung 20 (Figur 1 und 2), im Wesentlichen bestehend aus einem Pneumatikzylinder 21. Der Pneumatikzylinder 21 ist an der Halteplatte 5 gelagert und die Kolbenstange 22 ist mit dem drehbar gelagerten Verstellring 6 verbunden. In Figur 2 sind die möglichen Endstellungen der Kolbenstange 22 dargestellt, wobei die in Volllinie dargestellte Stellung die geschlossene Stellung der Einrichtung darstellt. Bei der gestrichelt gezeichneten Darstellung ist die Kolbenstange 22 ausgefahren und die Einrichtung befindet sich in geöffneter Stellung. Zur zeichnerischen Darstellung wird darauf hingewiesen, dass sich der Pneumatikzylinder 21 und die Kolbenstange 22 verdeckt unter der Halteplatte 5 befinden. Zum besseren Verständnis wurde der Pneumatikzylinder 21 und die Kolbenstange 22 in ausgefahrener Stellung dennoch in Volllinie gezeichnet.

An der inneren wandung des vertikalen Abschnittes des rohrförmigen Verstellringes 6 und jeweils radial außerhalb der Führungsbolzen 15 sind Stützböcke 23 vorgesehen (Figur 2). Die Stützböcke 23 wirken am Ende der Drehbewegung des Verstellringes 6 zum verschließen unmittelbar mechanisch mit Nocken 24 an den C-förmigen Klemmsegmenten 13 im Bereich der Tragbolzen 10 zusammen. D.h. in der Verbundstellung befinden sich die Stützböcke 23 radial außerhalb der Nocken 14, so dass auch im Falle eines Druckausfalles in der pneumatischen Verstelleinrichtung 20 die C-förmigen Klemmsegmente 13 sicher in der Verbundstellung gehalten werden.

Nachfolgend soll die Einrichtung in der Funktion näher beschrieben werden. In der geöffneten Stellung entsprechend Figur 3 ist die Kolbenstange 22 des Pneumatikzylinders 21 ausgefahren. Dadurch ist der Verstellring 6 gegenüber der statisch festen Halteplatte 5 im Uhrzeigersinn verdreht. Alle Führungsbolzen 15 befinden sich innerhalb der Kurvenbahn 18 im Bereich der Punkte 19 in einer radial äußeren Position und damit befinden sich auch die C-förmigen Klemmsegmente 13 in einer äußeren Position.

Zum Zwecke der stabilen, sicheren und druckfesten Verbindung des Prozessbehälters 3 mit dem Deckel 2 wird die pneumatische Verstelleinrichtung 20 derart betätigt, dass die Kolbenstange 22 des Pneumatikzylinders 21 eingezogen ist. Dadurch wird der Verstellring 6 gegenüber der statisch festen Halteplatte 5 entgegen dem Uhrzeigersinn verdreht. Die in den Kurvenbahnen 18 geführten Führungsbolzen 15 werden entsprechend ihrer Position innerhalb der Langlochlager 16 in eine radial innere Position verschoben. Zwangsweise werden dabei auch die C-förmigen Klemmsegmente 13 in eine radial innere Position bewegt, so dass sie die Flansche am Prozessbehälter 3 und am Deckel 2 übergreifen. Im letzen Stadium der Verdrehung des verstellringes 6 gegenüber der Halteplatte 5 werden die Stützböcke 23 hinter die Nocken 24 bewegt, so dass die C-förmigen Klemmsegmente 13 radial arretiert sind (Figur 4).

zum Abschluss des Kupplungsvorganges wird die Dichtung 4 mit einem inneren Druck beaufschlagt, so dass zwischen dem Prozessbehälter 3 und dem Deckel 2 eine sichere druckfeste Abdichtung gewährleistet ist.

Auch im Falle eines Druckabfalles innerhalb der pneumatischen Verstelleinrichtung 20 können die C-förmigen Klemmsegmente 13 nicht radial entfernt werden. Die beispielhafte Ausführung hat weiter den Vorteil, dass die C-förmigen Klemmsegmente 13 nur über die Flansche des Deckels 2 und des Prozessbehälters 3 bewegt werden, ohne dass ein Druck in zentrischer oder axialer Richtung erforderlich ist. Damit kann eine relativ hohe Toleranz der einzelnen Elemente zugelassen werden. Bei den Lösungen nach dem Stand der Technik mit trapezartiger Ausbildung der Flansche ist dem gegenüber stets eine hohe Passgenauigkeit erforderlich.

## Patentansprüche

1. Einrichtung zur lösbaren Verbindung von zwei Flanschen mit mindestens drei C-förmigen Klemmsegmenten (13) die ringförmig um die Flansche radial verschiebbar angeordnet sind und in der Verbundstellung die Flansche radial von außen übergreifen, einer verdrehfesten und zur Verbindungsebene der Flansche parallelen Halteplatte (5) mit Langlöchern sowie einer zur Halteplatte (5) parallelen und drehbaren Führungsplatte (7) mit Kurvenbahnen (18) und Führungsbolzen (15) die in den Langlöchern in der Halteplatte (5) radial verschiebbar gelagert und in den Kurvenbahnen (18) der Führungsplatte (7) geführt sind,
**dadurch gekennzeichnet, dass**
- an der Führungsplatte (7) ein Verstellring (6) vorhanden ist und
- dass eine Verstelleinrichtung vorgesehen ist, die an der Halteplatte (5) gelagert und mit dem Verstellring (6) verbunden ist, und die geeignet ist, den Verstellring (6) mit der Führungsplatte (7) gegenüber der Halteplatte (5) zu verdrehen.

2. Einrichtung nach Anspruch 1, **dadurch gekennzeichnet, dass** der Verstellring (6) radial außen einen Tragkranz (8) aufweist und dass an der Halteplatte (5) mindestens zwei Rollenlager (9) mit mindestens je einer Tragrolle (11) und einer Stützrolle (12) vorhanden sind, die den Tragkranz (8) übergreifen, wobei der Tragkranz (8) auf den Tragrollen (11) aufliegt und ein äußerer Mantel des Verstellringes (6) radial innen an den Stützrollen (12) anliegt.

3. Einrichtung nach Anspruch 1 oder 2, **dadurch gekennzeichnet, dass** am Verstellring (6) Stützböcke (23) und an den C-förmigen Klemmsegmenten (13) Nocken (24) vorhanden sind, die in der Verbundstellung in einer radialen Linie zur Z-Achse der Flansche aneinander liegen und eine radiale Verschiebung der C-förmigen Klemmsegmente (13) blockieren.

## Claims

1. Device for the releasable connection of two flanges having at least three C-shaped clamping segments (13), which are arranged annularly around the flanges in a radially displaceable manner and in the connected position engage over the flanges radially from the outside, having a rotationally fixed retaining plate (5) which is parallel to the connecting plane of the flanges and has slots, and also having a rotatable guide plate (7) which is parallel to the retaining plate (5) and has curved paths (18) and guide pins (15) that are mounted such that they can be displaced radially in the slots in the retaining plate (5) and are guided in the curved paths (18) of the guide plate (7),
**characterized in that**
- on the guide plate (7) there is provided an adjusting ring (6) and
- **in that** there is provided an adjusting device, which is mounted on the retaining plate (5) and is connected to the adjusting ring (6), and which is suitable for rotating the adjusting ring (6) with the guide plate (7) with respect to the retaining plate (5).

2. Device according to Claim 1, **characterized in that** the adjusting ring (6) has a load-bearing ring (8) radially on the outside and **in that** at least two roller bearings (9), each having at least one load-bearing roller (11) and a supporting roller (12), are present on the retaining plate (5), said roller bearings (9) engaging over the load-bearing ring (8), wherein the load-bearing ring (8) rests on the load-bearing rollers (11) and an outer casing of the adjusting ring (6) bears radially on the inside against the supporting rollers (12).

3. Device according to Claim 1 or 2, **characterized in that** supporting blocks (23) are present on the adjusting ring (6) and cams (24) are present on the C-shaped clamping segments (13), said supporting blocks (23) and cams (24) in the connected position resting against one another in a radial line with respect to the Z axis of the flanges and blocking radial displacement of the C-shaped clamping segments (13).

## Revendications

1. Dispositif pour le raccordement déconnectable de deux brides, comprenant au moins trois segments de serrage en forme de C (13) qui sont disposés sous forme annulaire de manière déplaçable radialement autour des brides et qui viennent en prise par le dessus radialement depuis l'extérieur avec les brides dans la position d'assemblage, une plaque de retenue (5) avec des trous oblongs, fixée en rotation et parallèle au plan de raccordement des brides, ainsi qu'une plaque de guidage (7) parallèle à la plaque de retenue (5) et rotative, avec des pistes de came (18) et des boulons de guidage (15) qui sont montés dans les trous oblongs de manière déplaçable radialement dans la plaque de retenue (5) et qui sont guidés dans les pistes de came (18) de la plaque de guidage (7),
**caractérisé en ce que**
- une bague de réglage (6) est prévue sur la plaque de guidage (7) et
- un dispositif de réglage est prévu, lequel est monté sur la plaque de retenue (5) et est connecté à la bague de réglage (6), et est approprié pour faire tourner la bague de réglage (6) avec la plaque de guidage (7) par rapport à la plaque de retenue (5).

2. Dispositif selon la revendication 1, **caractérisé en ce que** la bague de réglage (6) présente radialement à l'extérieur une couronne porteuse (8) et **en ce qu'**au moins deux paliers à rouleaux (9) avec au moins un rouleau porteur (11) et un rouleau de support (12) sont disposés sur la plaque de retenue (5), lesquels viennent en prise par le dessus avec la couronne porteuse (8), la couronne porteuse (8) reposant sur les rouleaux porteurs (11) et une enveloppe extérieure de la bague de réglage (6) s'appliquant radialement à l'intérieur sur les rouleaux de support (12).

3. Dispositif selon la revendication 1 ou 2, **caractérisé en ce que** des blocs de support (23) sont prévus sur la bague de réglage (6) et des cames (24) sont prévues sur les segments de serrage en forme de C (13), lesquelles se situent dans la position d'assemblage l'une contre l'autre dans une ligne radiale par rapport à l'axe Z des brides, et bloquent un mouvement radial des segments de serrage en forme de C (13).
